(19) Europäisches Patentamt
European Patent Office
Office européen des brevets

(11) **EP 4 704 178 A1**

(12) **EUROPEAN PATENT APPLICATION**

(43) Date of publication:
**04.03.2026 Bulletin 2026/10**

(21) Application number: 25199312.7

(22) Date of filing: **01.09.2025**

(51) International Patent Classification (IPC):
**H01M 4/36** (2006.01)       **H01M 4/525** (2010.01)
**H01M 4/58** (2010.01)       **H01M 10/0525** (2010.01)

(52) Cooperative Patent Classification (CPC):
**H01M 4/5825; C01B 25/45; H01M 4/366;
H01M 4/525; C01P 2004/61; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.08.2024 KR 20240117816**

(71) Applicant: **SK On Co., Ltd.**
**Seoul 03161 (KR)**

(72) Inventors:
• **YEON, Jeong Seok**
  **34124 Daejeon (KR)**
• **KIM, Jae Ram**
  **34124 Daejeon (KR)**
• **BAE, Ji Hee**
  **34124 Daejeon (KR)**
• **SONG, Yeon Hwa**
  **34124 Daejeon (KR)**

(74) Representative: **Stolmár & Partner**
**Patentanwälte PartG mbB**
**Blumenstraße 17**
**80331 München (DE)**

(54) **CATHODE FOR LITHIUM SECONDARY BATTERY AND LITHIUM SECONDARY BATTERY INCLUDING THE SAME**

(57)    A cathode for a lithium secondary battery according to embodiments of the present disclosure includes a cathode current collector, a first cathode active material layer disposed on at least one surface of the cathode current collector and including lithium metal phosphate particles, and a second cathode active material layer disposed on the first cathode active material layer and including lithium-transition metal oxide particles, wherein the content of the lithium-transition metal oxide particles, based on the total weight of the lithium metal phosphate particles and the lithium-transition metal oxide particles, is 20 wt% to 70 wt%.

FIG. 1

100

**Description**

BACKGROUND

1. Field of the Invention

The disclosure of the present application relates to a cathode for a lithium secondary battery and a lithium secondary battery including the same.

2. Description of the Related Art

A secondary battery is a battery that can be repeatedly charged and discharged. With the rapid progress of information and communication technology and display industries, the secondary battery has been widely applied to various portable electronic telecommunication devices such as a camcorder, a mobile phone, a laptop computer, etc. as their power sources. Recently, battery packs including the secondary battery have also been developed and applied to eco-friendly automobiles such as a hybrid vehicle, etc. as their power sources.

Examples of the secondary batteries may include a lithium secondary battery, a nickel-cadmium battery, a nickel-hydrogen battery and the like. Among them, the lithium secondary battery has a high operating voltage and a high energy density per unit weight, making it advantageous in terms of charging speed and lightweight design, such that development thereof is progressing in this regard.

Recently, as the application scope of lithium secondary batteries continues to expand, development for a lithium secondary battery having a higher capacity and output is progressing. For example, the capacity characteristics and cycle life characteristics of the lithium secondary battery may deteriorate depending on the cathode structure of the lithium secondary battery, and a cathode active material and a conductive material included in the cathode.

SUMMARY

According to an aspect of the present disclosure, there may be provided a cathode for a lithium secondary battery with improved cycle life characteristics.

According to another aspect of the present disclosure, there may be provided a lithium secondary battery with improved cycle life characteristics.

A cathode for a lithium secondary battery according to exemplary embodiments of the present disclosure includes: a cathode current collector; a first cathode active material layer disposed on at least one surface of the cathode current collector and including lithium metal phosphate particles; and a second cathode active material layer disposed on the first cathode active material layer and including lithium-transition metal oxide particles, wherein the content of the lithium-transition metal oxide particles, based on the total weight of the lithium metal phosphate particles and the lithium-transition metal oxide particles, is 20 wt% to 70 wt%.

In some embodiments, the content of the lithium-transition metal oxide particles, based on the total weight of the lithium metal phosphate particles and the lithium-transition metal oxide particles, may be 30% by weight to 50% by weight.

In some embodiments, the lithium metal phosphate particles may include manganese.

In some embodiments, a molar ratio of manganese, based on the total moles of metals other than lithium included in the lithium metal phosphate particles, may be 0.5 to 0.7.

In some embodiments, the lithium metal phosphate particles may include a crystal structure represented by Formula 1-1 below:

[Formula 1-1]

$$Li_aMn_xFe_{1-x}P_yO_{4+z}$$

In Formula 1-1, $0.9 \leq a \leq 1.2$, $0.5 \leq x \leq 0.7$, $0.9 \leq y \leq 1.2$, and $-0.1 \leq z \leq 0.1$.

In some embodiments, the lithium-transition metal oxide particles may include a single particle form.

In some embodiments, the lithium-transition metal oxide particles may include nickel, cobalt and manganese.

In some embodiments, the lithium-transition metal oxide particles may have a median particle diameter (D50) of 3 $\mu$m to 4 $\mu$m.

In some embodiments, a ratio of the thickness of the first cathode active material layer to that of the second cathode active material layer may be 0.6 to 5.0.

In some embodiments, the first cathode active material layer may be directly disposed on the cathode current collector, and the second cathode active material layer may be directly disposed on the first cathode active material layer.

A lithium secondary battery according to exemplary embodiments of the present disclosure includes: the above-described cathode for a lithium secondary battery; and an anode disposed opposite to the cathode.

According to an embodiment of the present disclosure, the cycle life characteristics of the cathode for a lithium secondary battery may be enhanced.

According to an embodiment of the present disclosure, the energy density of the cathode for a lithium secondary battery may be improved.

The cathode for a lithium secondary battery of the present disclosure and the lithium secondary battery including the same may be widely applied in green technology fields, such as electric vehicles, battery charging stations, as well as solar power generation, wind power generation, and the like, which use the batteries. The cathode for a lithium secondary battery of the present disclosure and the lithium secondary battery including the same may be used in eco-friendly electric vehicles, hybrid vehicles, and the like, which are aimed at mitigating climate change by reducing air pollution and greenhouse gas emissions.

## BRIEF DESCRIPTION OF THE DRAWINGS

The above and other objects, features and other advantages of the present disclosure will be more clearly understood from the following detailed description taken in conjunction with the accompanying drawings, in which:

FIG. 1 is a schematic cross-sectional view illustrating a cathode for a lithium secondary battery according to exemplary embodiments; and

FIGS. 2 and 3 are schematic plan and cross-sectional views illustrating a lithium secondary battery according to exemplary embodiments, respectively.

## DETAILED DESCRIPTION

Embodiments of the present disclosure provide a cathode for a lithium secondary battery (hereinafter, also abbreviated as a "cathode"). In addition, a lithium secondary battery (hereinafter, also abbreviated as a "secondary battery") including the cathode is provided.

Hereinafter, the embodiments of the present disclosure will be described in detail. However, these embodiments are merely examples, and the present disclosure is not limited to the specific embodiments described as examples.

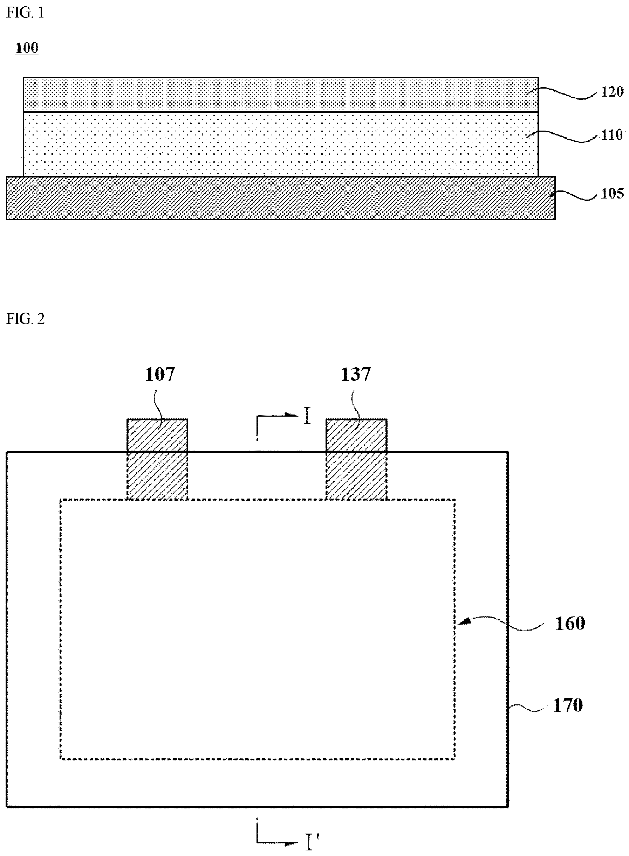

FIG. 1 is a schematic cross-sectional view illustrating a cathode for a lithium secondary battery according to exemplary embodiments.

Referring to FIG. 1, a cathode 100 may include a cathode current collector 105, a first cathode active material layer 110, and a second cathode active material layer 120.

The cathode current collector 105 may include stainless steel, nickel, aluminum, titanium or an alloy thereof. The cathode current collector 105 may also include aluminum or stainless steel having a surface treated with carbon, nickel, titanium or silver. For example, the cathode current collector 105 may have a thickness of 10 to 50 $\mu$m.

A first cathode active material layer 110 may be disposed on at least one surface of the cathode current collector 105.

According to an embodiment, the first cathode active material layer 110 may be directly disposed on the cathode current collector 105.

The first cathode active material layer 110 may include lithium metal phosphate particles. For example, the lithium metal phosphate particles may be provided as a cathode active material of the first cathode active material layer 110. Since the lithium metal phosphate particles are included in the first cathode active material layer 110, which is relatively adjacent to the cathode current collector 105, the operational reliability and stability of the cathode 100 may be improved. Accordingly, the cycle life characteristics of the secondary battery may be enhanced.

For example, the first cathode active material layer 110 may include a plurality of lithium metal phosphate particles.

The content of the lithium metal phosphate particles, based on the total weight of the first cathode active material layer 110, may be 30% by weight ("wt%") or more, 40 wt% or more, 50 wt% or more, 60 wt% or more, 70 wt% or more, 80 wt% or more, or 90 wt% or more.

The content of the lithium metal phosphate particles, based on the total weight of the first cathode active material layer 110, may be 99 wt% or less, 95 wt% or less, 90 wt% or less, or 85 wt% or less.

In some embodiments, the lithium metal phosphate particles may include manganese (Mn). Accordingly, the energy density of the cathode 100 may be improved and the output characteristics may be enhanced.

In some embodiments, a molar ratio of manganese, based on the total moles of metals other than lithium included in the lithium metal phosphate particles, may be 0.5 to 0.7. Within the above range, the dispersibility of the lithium metal phosphate particles may be improved while suppressing manganese dissolution. Accordingly, the cycle life characteristics during repeated charging and discharging of the secondary battery may be improved.

In some embodiments, the lithium metal phosphate particles may have an olivine structure and may include a crystal structure represented by Formula 1 below.

$$[\text{Formula 1}] \qquad Li_aM_xP_yO_{4+z}$$

In Formula 1, a, x, y and z may satisfy $0.9 \leq a \leq 1.2$, $0.99 \leq x \leq 1.01$, $0.9 \leq y \leq 1.2$, and $-0.1 \leq z \leq 0.1$, and M may include at least one selected from the group consisting of Fe, Co, Ni and Mn.

The chemical structure represented by Formula 1 indicates a bonding relationship between elements included in the crystal structure of the cathode active material and does not exclude other additional elements. For example, M includes Fe, Co, Ni and/or Mn, and Fe, Co, Ni and/or Mn may be provided as main active elements of the cathode active material. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements to enhance chemical stability or the crystal structure thereof. The auxiliary element may be incorporated into the crystal structure together with the main active elements to form a bond, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act as an auxiliary active element which contributes to the capacity/output activity of the cathode active material together with, for example, Fe, Co, Ni or Mn, such as Al.

For example, the cathode active material or the lithium metal phosphate particles may include a crystal structure represented by Formula 1-1 below.

$$[\text{Formula 1-1}] \qquad Li_aMn_xFe_{1-x}P_yO_{4+z}$$

In Formula 1-1, a, x, y and z may satisfy $0.9 \leq a \leq 1.2$, $0.5 \leq x \leq 0.7$, $0.9 \leq y \leq 1.2$, and $-0.1 \leq z \leq 0.1$.

The cathode active material or the lithium metal phosphate particles may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

In one embodiment, the lithium metal phosphate particles may include at least one of $LiFePO_4$ and $LiMn_xFe_{1-x}PO_4$ ($0.5 \leq x \leq 0.7$).

For example, the lithium metal phosphate particles may exhibit improved stability and cost-effectiveness compared to other particles included in the cathode active material.

In one embodiment, the cathode active material included in the first cathode active material layer 110 may be substantially composed of the lithium metal phosphate particles.

In exemplary embodiments, the second cathode active material layer 120 may be disposed on the first cathode active material layer 110.

According to an embodiment, the second cathode active material layer 120 may be directly disposed on the first cathode active material layer 110.

The second cathode active material layer 120 may include lithium-transition metal oxide particles.

For example, the second cathode active material layer 120 may include a plurality of lithium-transition metal oxide particles.

The content of the lithium-transition metal oxide particles, based on the total weight of the second cathode active material layer 120, may be 20 wt% or more, 30 wt% or more, 40 wt% or more, 50 wt% or more, 60 wt% or more, 70 wt% or more, 80 wt% or more, or 90 wt% or more.

The content of the lithium-transition metal oxide particles, based on the total weight of the second cathode active material layer 120, may be 99 wt% or less, 95 wt% or less, 90 wt% or less, or 85 wt% or less.

In one embodiment, the cathode active material included in the second cathode active material layer 120 may be substantially composed of the lithium-transition metal oxide particles.

In exemplary embodiments, the lithium-transition metal oxide particles may include a lithium-nickel metal oxide. The lithium-nickel metal oxide may further include at least one of cobalt (Co), manganese (Mn) and aluminum (Al).

In some embodiments, the lithium-transition metal oxide particles or the lithium-nickel metal oxide may include a layered structure or a crystal structure represented by Formula 2 below.

$$[\text{Formula 2}] \qquad Li_xNi_aM_bO_{2+z}$$

In Formula 2, x, a, b and z may satisfy $0.9 \leq x \leq 1.2$, $0.5 \leq a \leq 0.99$, $0.01 \leq b \leq 0.5$, and $-0.5 \leq z \leq 0.1$. As described above, M may include Co, Mn and/or Al.

The chemical structure represented by Formula 2 indicates a bonding relationship between elements included in the layered structure or crystal structure of the lithium transition metal oxide particles and does not exclude other additional elements. For example, M includes Co and/or Mn, and Co and/or Mn may be provided as main active elements of the lithium-transition metal oxide particles together with Ni. Here, it should be understood that Formula 2 is provided to express the bonding relationship between the main active elements, and is a formula encompassing the introduction and substitution of additional elements.

In one embodiment, auxiliary elements may be further included, which are added to the main active elements to enhance the chemical stability of the lithium-transition metal oxide particles or the layered structure/crystal structure. The auxiliary elements may be incorporated into the layered structure/crystal structure together with the main active elements to form a bond, and it should be understood that this case is also included within the chemical structure range represented by Formula 2.

The auxiliary element may include at least one selected from the group consisting of, for example, Na, Mg, Ca, Y, Ti, Hf, V, Nb, Ta, Cr, Mo, W, Fe, Cu, Ag, Zn, B, Al, Ga, C, Si, Sn, Sr, Ba, Ra, P and Zr. The auxiliary element may also act as an auxiliary active element which contributes to the capacity/output activity of the lithium-transition metal oxide particles together with, for example, Co or Mn, such as Al.

For example, the lithium-transition metal oxide particles or the lithium-nickel metal oxide may include a layered structure or a crystal structure represented by Formula 2-1 below.

$$[\text{Formula 2-1}] \qquad Li_xNi_aM1_{b1}M2_{b2}O_{2+z}$$

In Formula 2-1, M1 may include Co, Mn and/or Al. M2 may include the above-described auxiliary elements. In Formula 2-1, x, a, b1, b2 and z may satisfy $0.9 \leq x \leq 1.2$, $0.6 \leq a \leq 0.99$, $0.01 \leq b1+b2 \leq 0.4$, and $-0.5 \leq z \leq 0.1$.

The lithium-transition metal oxide particles may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may be present on the surface of the lithium-nickel metal oxide particles, or may penetrate through the surface of the lithium-nickel metal oxide particles to become incorporated into the bonding structure represented by Formula 2 or Formula 2-1.

The lithium-transition metal oxide particles may include nickel, cobalt and manganese. For example, the lithium-transition metal oxide particles may include nickel-cobalt-manganese (NCM)-based lithium oxide.

Ni may be provided as a transition metal associated with the output and capacity of the lithium secondary battery. Therefore, by employing lithium-transition metal oxide particles with adjusted Ni content, a high-capacity cathode and a high-capacity lithium secondary battery may be provided.

In this regard, as the content of Ni increases, long-term storage stability and cycle life stability of the cathode or the secondary battery may be relatively reduced, and side reactions with the electrolyte may also increase. However, according to exemplary embodiments, by including Co, the cycle life stability and capacity retention characteristics may be improved through Mn while maintaining electrical conductivity.

The content of Ni (e.g., the molar fraction of nickel based on the total moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

For example, the cycle life characteristics and stability may be enhanced by the lithium metal phosphate particles included in the first cathode active material layer 110, while the capacity characteristics and output characteristics may be improved by the lithium-transition metal oxide particles included in the second cathode active material layer 120.

In some embodiments, the lithium-transition metal oxide particles may include a single particle form. Accordingly, crack formation in the lithium-transition metal oxide particles included in the second cathode active material layer 120, which is disposed at the outermost portion of the cathode 100, may be suppressed, and the cycle life characteristics and impact resistance of the secondary battery may be further enhanced.

The term "single particle form" as used herein is used to, for example, exclude secondary particles formed by aggregation of a plurality of primary particles. For example, in the lithium-transition metal oxide particles, a secondary-particle structure in which (e.g., greater than 10, 20 or more, 30 or more, 40 or more, 50 or more, etc.) of primary particles are assembled or agglomerated may be excluded.

The term "single particle form" as used herein does not exclude a structure in which 2 to 10 single particles are simply attached to or in contact with each other without aggregation to form a monolithic shape.

In some embodiments, the lithium-transition metal oxide particles may include a structure in which a plurality of primary particles are integrally fused together and substantially transformed into a single particle form. The structure transformed into a single particle refers to a structure in which a plurality of primary particles are substantially indistinguishable and unified into one particle, and is distinguished from a secondary particle formed by aggregation of the plurality of primary particles.

In some embodiments, the lithium-transition metal oxide particles may have a median particle diameter (D50) of 3 μm to 4 μm. Within the above range, the impact resistance of the lithium-transition metal oxide particles may be enhanced, and the output characteristics and cycle life characteristics of the secondary battery may be improved.

In some embodiments, the lithium metal phosphate particles may have a median particle diameter (D50) of 0.5 μm to 1.5 μm. Within the above range, the cycle life characteristics and stability of the cathode may be further improved.

As used herein, the term "median particle diameter," "D50" or "median particle diameter (D50)" may refer to the particle diameter at which the cumulative volume percentage in the particle size distribution, obtained based on particle volume, reaches 50%.

The particle size distribution of the lithium-transition metal oxide particles may be measured using a particle size analyzer (PSA) (e.g., theMastersizer from Malvem Panalytical). The particle diameter corresponding to 50% of the cumulative volume percentage in the particle size distribution may be evaluated as the median particle diameter (D50).

According to an embodiment, the first cathode active material layer 110 may be directly disposed on the cathode current collector 105, and the second cathode active material layer 120 may be directly disposed on the first cathode active material layer 110. Accordingly, metal eluted from the lithium metal phosphate particles may adhere to the lithium-transition metal oxide particles, thereby suppressing the elution of metal into the electrolyte. As a result, the cycle life characteristics and operational stability may be further enhanced.

In exemplary embodiments, the content of the lithium-transition metal oxide particles, based on the total weight of the lithium metal phosphate particles and the lithium-transition metal oxide particles, may be 20 wt% to 70 wt%, and in some embodiments, 30 wt% to 50 wt%. Within the above range, the output characteristics, energy density, and cycle life characteristics of the secondary battery may be improved.

For example, the lithium metal phosphate particles and the lithium-transition metal oxide particles may be respectively disposed in a lower layer and an upper layer of the cathode 100, and the content range may be appropriately adjusted, thereby improving energy density and output characteristics, while enhancing the cycle life characteristics of the secondary battery. For example, by simultaneously adjusting the arrangement and content, the cycle life characteristics, output characteristics, and energy density may all be improved.

For example, the content of the lithium-transition metal oxide particles, based on the total weight of the lithium metal phosphate particles and the lithium-transition metal oxide particles, may be controlled by adjusting factors such as the loading amounts of the slurry for forming the first cathode active material layer 110 and the slurry for forming the second cathode active material layer 120, the content of the lithium metal phosphate particles based on the total weight of the first cathode active material layer 110, the content of the lithium-transition metal oxide particles based on the total weight of the second cathode active material layer 120, the thickness of the first cathode active material layer 110, and the thickness of the second cathode active material layer 120.

In some embodiments, a ratio of the thickness of the first cathode active material layer 110 to that of the second cathode active material layer 120 may be 0.3 to 7.5, and in one embodiment, 0.6 to 5.0. Within the above range, the energy density, output characteristics and cycle life characteristics may be further improved.

The term "thickness" as used herein may indicate the length in the stacking direction of the secondary battery and/or the cathode 100.

In one embodiment, the first cathode active material layer 110 may have a thickness of 15 μm to 70 μm.

In one embodiment, the second cathode active material layer 120 may have a thickness of 15 μm to 50 μm.

Within the above thickness range, the energy density and output characteristics may be improved while sufficiently enhancing the cycle life characteristics.

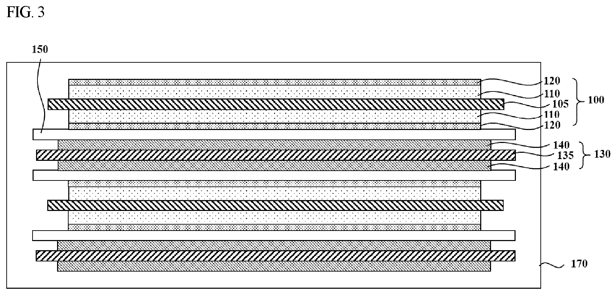

FIGS. 2 and 3 are schematic plan and cross-sectional views illustrating a lithium secondary battery according to exemplary embodiments, respectively. For example, FIG. 3 is a cross-sectional view taken along line I-I' of FIG. 2 in the thickness direction.

The structures illustrated in FIGS. 2 and 3 are examples for the convenience of description, and the structure of the lithium secondary battery according to the embodiments of the present disclosure is not limited thereto.

Referring to FIG. 2 and FIG. 3, the lithium secondary battery may include the above-described cathode 100 and an anode 130 disposed opposite to the cathode 100.

The above-described lithium metal phosphate particles may be mixed in a solvent to prepare a first cathode slurry. The first cathode slurry may be coated/deposited on at least one surface of the cathode current collector 105, and then dried and roll-pressed to prepare the first cathode active material layer 110. The coating may be performed by processes such as gravure coating, slot die coating, simultaneous multilayer die coating, imprinting, doctor blade coating, dip coating, bar coating, casting or the like.

The above-described lithium-transition metal oxide particles may be mixed in a solvent to prepare a second cathode slurry. The second cathode slurry may be coated/deposited on the first cathode active material layer 110, and then dried and roll-pressed to prepare the second cathode active material layer 120. The coating may be performed using substantially the same type of method as the above-described coating method of the first cathode active material layer 110.

In one embodiment, the first cathode slurry and the second cathode slurry may be sequentially applied to the cathode current collector 105, and then dried and roll-pressed, such that the first cathode active material layer 110 and the second cathode active material layer 120 may be simultaneously formed.

The first and second cathode active material layers 110 and 120 may respectively further include a binder, and may optionally further include a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF series binder may be used as the cathode binder. In this case, the amount of binder for forming the cathode active material layers 110 and 120 may be reduced, and the amount of the cathode active material may be relatively increased. Accordingly, the output characteristics and capacity characteristics of the secondary battery may be improved.

The first and second cathode slurries may further include a thickener and/or a dispersant. In one embodiment, the first cathode slurry and/or the second cathode slurry may further include a thickener such as carboxymethyl cellulose (CMC).In one embodiment, the first and second cathode slurries may further include a conductive material. The conductive material may include, for example, a carbon-based conductive material such as graphite, carbon black, acetylene black, Ketjen black, graphene, carbon nanotubes(e.g., multi-walled carbon nanotubes (MWCNTs), single-walled carbon nanotubes (SWCNTs)), vapor-grown carbon fiber (VGCF), or carbon fiber; and/or a metal-based conductive material such as tin, tin oxide, titanium oxide, or perovskite materials such as $LaSrCoO_3$ and $LaSrMnO_3$.

The anode 130 may include an anode current collector 135, and an anode active material layer 140 formed on at least one surface of the anode current collector 135.

For example, the anode current collector 135 may include a copper foil, a nickel foil, a stainless steel foil, a titanium foil, a nickel foam, a copper foam, a polymer substrate coated with a conductive metal and the like. These may be used alone or in combination of two or more thereof. For example, the anode current collector 135 may have a thickness of 6 $\mu$m to 50 $\mu$m.

The anode active material layer 140 may include an anode active material. As the anode active material, a material capable of intercalating and deintercalating lithium ions may be used. For example, as the anode active material, carbon-based materials such as crystalline carbon, amorphous carbon, a carbon composite, or carbon fibers, etc.; lithium metal; a lithium alloy; a silicon (Si)-containing material or a tin (Sn)-containing material, etc. may be used. These may be used alone or in combination of two or more thereof.

The amorphous carbon may include hard carbon, soft carbon, cokes, mesocarbon microbead (MCMB), mesophase pitch-based carbon fiber (MPCF) or the like.

The crystalline carbon may include graphite-based carbon such as natural graphite, artificial graphite, graphite cokes, graphite MCMB, graphite MPCF or the like.

The lithium metal may include pure lithium metal and/or lithium metal having a protective layer formed thereon for suppressing dendrite growth and the like. In one embodiment, a lithium metal-containing layer deposited or coated on the anode current collector 135 may be used as the anode active material layer 140. In one embodiment, a lithium thin film layer may also be used as the anode active material layer 140.

Elements contained in the lithium alloy may include aluminum, zinc, bismuth, cadmium, antimony, silicon, lead, tin, gallium, indium, etc. These may be used alone or in combination of two or more thereof.

The silicon-containing material may provide further increased capacity characteristics. The silicon-containing material may include Si, $SiO_x$ ($0<x<2$), metal-doped $SiO_x$ ($0<x<2$), a silicon-carbon composite, etc.

The metal may include lithium and/or magnesium, and the metal-doped $SiO_x$ ($0<x<2$) may include a metal silicate.

The anode active material may be mixed in a solvent to prepare an anode slurry. The anode slurry may be coated/deposited to the anode current collector 135, then dried and roll-pressed to prepare the anode active material layer 140. The coating may be performed by processes such as gravure coating, slot die coating, simultaneous multilayer die coating, imprinting, doctor blade coating, dip coating, bar coating, casting or the like. The anode active material layer 140 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when preparing the cathode 100 as the binder, conductive material and thickener may be used for the anode.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as the anode binder. These may be used alone or in combination of two or more thereof.

In exemplary embodiments, a separation membrane 150 may be interposed between the cathode 100 and the anode 130. The separation membrane 150 may be configured to prevent an electrical short-circuit between the cathode 100 and the anode 130, and to allow the flow of ions. For example, the separation membrane may have a thickness of 10 $\mu$m to 20 $\mu$m.

For example, the separation membrane 150 may include a porous polymer film or a porous nonwoven fabric.

The porous polymer film may include a polyolefin-based polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers, etc.

The separation membrane 150 may also include a ceramic-based material. For example, inorganic particles may be applied to the polymer film or dispersed within the polymer film to improve heat resistance.

The separation membrane 150 may have a single-layer or multi-layer structure including the above-described polymer film and/or non-woven fabric.

According to exemplary embodiments, an electrode cell is defined by the cathode 100, the anode 130, and the separation membrane 150, and a plurality of electrode cells are stacked to form, for example, a jelly roll type electrode assembly 160. For example, the electrode assembly 160 may be formed by winding, stacking, z-folding, or stack-folding the separation membrane 150.

The electrode assembly 160 may be accommodated in a case 170 together with an electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2$ $(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methyl propyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfoxide, acetonitrile, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis(oxalato) phosphate, lithium difluoro phosphate, etc.

The borate compound may include lithium bis(oxalate) borate, etc.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode 100 and the anode 130 in place of the above-described separation membrane 150.

The solid electrolyte may include a sulfide-based electrolyte. As a non-limiting example, the sulfide-based electrolyte may include $Li_2S\text{-}P_2S_5$, $Li_2S\text{-}P_2S_5\text{-}LiCl$, $Li_2S\text{-}P_2S_5\text{-}LiBr$, $Li_2S\text{-}P_2S_5\text{-}LiCl\text{-}LiBr$, $Li_2S\text{-}P_2S_5\text{-}Li_2O$, $Li_2S\text{-}P_2S_5\text{-}Li_2O\text{-}LiI$, $Li_2S\text{-}SiS_2$, $Li_2S\text{-}SiS_2\text{-}LiI$, $Li_2S\text{-}SiS_2\text{-}LiBr$, $Li_2S\text{-}SiS_2\text{-}LiCl$, $Li_2S\text{-}SiS_2\text{-}B_2S_3\text{-}LiI$, $Li_2S\text{-}SiS_2\text{-}P_2S_5\text{-}LiI$, $Li_2S\text{-}B_2S_3$, $Li_2S\text{-}P_2S_5\text{-}Z_mS_n$ (m and n are positive numbers, Z is Ge, Zn or Ga), $Li_2S\text{-}GeS_2$, $Li_2S\text{-}SiS_2\text{-}Li_3PO_4$, $Li_2S\text{-}SiS_2\text{-}Li_pMO_q$ (p and q are positive numbers, M is P, Si, Ge, B, Al, Ga or In), $Li_7\text{-}xPS_6\text{-}xCl_x$ ($0 \leq x \leq 2$), $Li_7\text{-}xPS_6\text{-}xBr_x$ ($0 \leq x \leq 2$), $Li_7\text{-}xPS_6\text{-}xI_x$ ($0 \leq x \leq 2$), etc. These may be used alone or in combination of two or more thereof.

In one embodiment, the solid electrolyte may include an oxide-based amorphous solid electrolyte, such as, for example, $Li_2O$-$B_2O_3$-$P_2O_5$, $Li_2O$-$SiO_2$, $Li_2O$-$B_2O_3$, $Li_2O$-$B_2O_3$-$ZnO$, etc.

As shown in FIGS. 2 and 3, electrode tabs (a cathode tab and an anode tab) may protrude from the cathode current collector 105 and the anode current collector 135, respectively, which belong to each electrode cell, and may extend to one side of the case 170. The electrode tabs may be fused together with the one side of the case 170 to form electrode leads (a cathode lead 107 and an anode lead 137) that extend or are exposed to the outside of the case 170.

The lithium secondary battery may be manufactured, for example, in a cylindrical shape using a can, a prismatic shape, a pouch shape or a coin shape.

Hereinafter, embodiments of the present disclosure will be further described with reference to specific experimental examples. However, the following examples and comparative examples included in the experimental examples are only given for illustrating the present disclosure and those skilled in the art will obviously understand that various alterations and modifications are possible within the scope and spirit of the present disclosure. Such alterations and modifications are duly included in the appended claims.

## Example 1

### (1) Preparation of cathode

#### 1) Preparation of lithium metal phosphate particles

$Mn_3O_4$, $FePO_4$, $LiH_2PO_4$ and sucrose (carbon source) were added to high-purity anhydrous alcohol at a molar ratio of 0.29:0.19:0.48:0.05 and mixed to prepare a mixture. The mixture was directly injected into a tube calcination furnace at 400°C and spray-dried to obtain $LiMn_{0.6}Fe_{0.4}PO_4$/C as a transition metal precursor. Thereafter, the transition metal precursor was naturally cooled to room temperature, then pulverized and classified to prepare lithium metal phosphate particles ($LiMn_{0.6}Fe_{0.4}PO_4$) having a median particle diameter (D50) of 0.8 $\mu$m.

#### 2) Preparation of lithium-transition metal oxide particles

$NiSO_4$, $CoSO_4$ and $MnSO_4$ were added and mixed in a molar ratio of 0.6:0.1:0.3 in distilled water from which dissolved oxygen had been removed by bubbling $N_2$ through it for 24 hours to prepare a mixed solution. The mixed solution was introduced into a reactor at 55 °C, and a co-precipitation reaction was performed for 36 hours using NaOH and $NH_3 \cdot H_2O$ as a precipitant and a chelating agent, to obtain $Ni_{0.6}Co_{0.1}Mn_{0.3}(OH)_2$ as a transition metal precursor. The transition metal precursor was dried at 80 °C for 12 hours, and then further dried at 110 °C for additional 12 hours.

Lithium hydroxide and the transition metal precursor were added to a dry high-speed mixer in a ratio of 1.05:1 and uniformly mixed for 20 minutes. The mixture was placed in a calcination furnace under an oxygen atmosphere, heated to 1000 °C at a heating rate of 2 °C/min, and maintained at 1000 °C for 15 hours. Oxygen was continuously supplied at a flow rate of 10 mL/min during the heating and calcination. After completion of the calcination, the calcined product was naturally cooled to room temperature, and then pulverized and classified to prepare lithium-transition metal oxide particles having a composition of $LiNi_{0.6}Co_{0.1}Mn_{0.3}O_2$ in the form of a single particle. The classification was performed so that the median particle diameter (D50) was 3.5 $\mu$m.

#### 3) Preparation of cathode

The lithium metal phosphate particles, carbon black and multi-walled carbon nanotubes as conductive materials, and PVDF as a binder were mixed in a mass ratio of 97:0.5:1.0:1.5 to prepare a first cathode slurry.

The lithium-transition metal oxide particles, carbon black as a conductive material, and PVDF as a binder were mixed in a mass ratio of 95:3:2 to prepare a second cathode slurry.

The first cathode slurry and the second cathode slurry were sequentially applied to an aluminum current collector, and then dried and roll-pressed to form a cathode including a first cathode active material layer and a second cathode active material layer, which are sequentially disposed on the aluminum current collector.

At this time, the ratio of the thickness of the first cathode active material layer to that of the second cathode active material layer was 3.3.

For the preparation of the cathode, the content of the lithium-transition metal oxide particles, based on the total weight of the lithium metal phosphate particles and the lithium-transition metal oxide particles, was adjusted to be 30 wt%.

### (2) Manufacture of a lithium secondary battery

An anode slurry, which includes 93 wt% of artificial graphite as an anode active material, 5 wt% of KS6 as a flake type conductive material, 1 wt% of styrene-butadiene rubber (SBR) as a binder, and 1 wt% of carboxymethyl cellulose (CMC) as a thickener, was prepared. The anode slurry was applied to a copper substrate, then dried and roll-pressed to prepare an anode.

Fourteen cathodes and fifteen anodes were notched into a predetermined size and stacked, then an electrode cell was fabricated by interposing a separation membrane (polyethylene, thickness: 25 $\mu$m) between the cathode and the anode. Thereafter, tab parts of the cathode and the anode were welded, respectively. The assembly of the welded cathode/separator/anode was placed into a pouch, and three sides of the pouch were sealed, leaving one side open for electrolyte injection. At this time, a portion having the electrode tab was included in the sealing part. After injecting the electrolyte through the remaining open side except for the sealing part, the remaining open side was also sealed, followed by allowing it to be impregnated for 12 hours or more.

A solution, prepared by dissolving a 1M $LiPF_6$ solution in a mixed solvent of EC/EMC (25/75; volume ratio), and further adding 1 wt% of vinylene carbonate (VC), and 0.5 wt% of 1,3-propenesultone (PRS) based on the total weight of the solution, was used as the electrolyte.

Then, pre-charging was conducted on the secondary battery manufactured as described above with a current (5A) corresponding to 0.25C for 36 minutes. After 1 hour, degassing was performed, then aging for 24 hours or more was conducted, followed by performing formation charging-discharging (charging conditions: CC-CV 0.2C 4.2V 0.05C CUT-OFF; discharging conditions: CC 0.2C 2.5V CUT-OFF).

### Examples 2 to 6, and Comparative Examples 2 and 3

Cathodes and lithium secondary batteries were manufactured in the same manner as in Example 1, except that the content of the lithium-transition metal oxide particles based on the total weight of the lithium metal phosphate particles and the lithium-transition metal oxide particles, and the ratio of the thickness of the first cathode active material layer to that of the second cathode active material layer were adjusted as shown in Table 1 below.

### Example 7

A cathode and a lithium secondary battery were manufactured in the same manner as in Example 1, except that $LiMn_{0.5}Fe_{0.5}PO_4$ was used as the lithium metal phosphate particles.

### Example 8

A cathode and a lithium secondary battery were manufactured in the same manner as in Example 1, except that $LiMn_{0.7}Fe_{0.3}PO_4$ was used as the lithium metal phosphate particles.

### Example 9

A cathode and a lithium secondary battery were manufactured in the same manner as in Example 1, except that $LiMn_{0.4}Fe_{0.6}PO_4$ was used as the lithium metal phosphate particles.

### Example 10

A cathode and a lithium secondary battery were manufactured in the same manner as in Example 1, except that $LiMn_{0.8}Fe_{0.2}PO_4$ was used as the lithium metal phosphate particles.

### Examples 11 and 12

Cathodes and lithium secondary batteries were manufactured in the same manner as in Example 1, except that the ratio of the thickness of the first cathode active material layer to that of the second cathode active material layer was adjusted as shown in Table 1 below.

### Examples 13 to 16

Cathodes and lithium secondary batteries were manufactured in the same manner as in Example 1, except for conditions shown in Table 1 below.

## Example 17

Lithium hydroxide and the transition metal precursor were added to a dry high-speed mixer in a ratio of 1.05:1 and uniformly mixed for 20 minutes. The mixture was placed in a calcination furnace under an oxygen atmosphere, heated to 1000 °C at a heating rate of 2 °C/min, and maintained at 1000 °C for 15 hours. Oxygen was continuously supplied at a flow rate of 10 mL/min during the heating and calcination. After completion of the calcination, the calcined product was naturally cooled to room temperature, and then pulverized and classified to prepare lithium-transition metal oxide particles (median particle diameter (D50) of 10 $\mu$m) having a composition of $LiNi_{0.6}Co_{0.1}Mn_{0.3}O_2$ in the form of secondary particles formed by aggregation of primary particles.

The lithium-transition metal oxide particles in the form of secondary particles, carbon black as a conductive material, and PVDF as a binder were mixed in a mass ratio of 95:3:2 to prepare a second cathode slurry. Except for using the second cathode slurry and the conditions described in Table 1 below, cathodes and lithium secondary batteries were manufactured in the same manner as in Example 1.

## Example 18

A cathode and a lithium secondary battery were manufactured in the same manner as in Example 1, except for using $LiFePO_4$ as the lithium metal phosphate particles and the conditions described in Table 1 below.

## Comparative Example 1

The lithium metal phosphate particles prepared according to Example 1 and the lithium-transition metal oxide particles were mixed in a weight ratio of 7:3, and used as the cathode active material.

A cathode slurry was prepared by mixing the cathode active material, carbon black as a conductive material, and PVDF as a binder in a mass ratio of 95:3:2.

The cathode slurry was coated on an aluminum current collector, and then dried and roll-pressed to prepare a cathode including a cathode active material layer having a single layer structure.

A lithium secondary battery was manufactured in the same manner as in Example 1, except that the above-prepared cathode was used.

## Comparative Example 4

A cathode and a lithium secondary battery were manufactured in the same manner as in Example 1, except for using the lithium-transition metal oxide particles in place of the lithium metal phosphate particles for the preparation of the first cathode active material layer and the conditions described in Table 1 below.

## Comparative Example 5

A cathode and a lithium secondary battery were manufactured in the same manner as in Example 1, except for using the lithium metal phosphate particles in place of the lithium-transition metal oxide particles for the preparation of the second cathode active material layer and the conditions described in Table 1 below.

## Experimental Example

### (1) Measurement of energy density

Charging (CC-CV 0.33C 4.2V 0.05C SOC 100% CUT-OFF) and discharging (CC 0.5C 2.5V SOC 0% CUT-OFF) were repeated twice on the above-described lithium secondary batteries of the examples and comparative examples in a chamber maintained at 25 °C. Then, the energy density (Wh/L) was calculated by multiplying the discharge capacity at the second cycle by the average discharge voltage and dividing the result by the electrode area.

### (2) Evaluation of high-temperature capacity retention rate (at 45 °C)

Charging (CC-CV 0.5C 4.3V 0.05C CUT-OFF) and discharging (CC 1.0C 2.5V CUT-OFF) were repeated 100 times on the above-described lithium secondary batteries of the examples and comparative examples in a chamber maintained at 45 °C. The discharge capacity at the 100th cycle was divided by the discharge capacity at the first cycle and multiplied by 100 to evaluate the high-temperature capacity retention rate.

(3) Evaluation of fast charge capacity retention rate (25 °C, 20 min)

Charging (20 min, CC Charge multi-steps, SOC 10% to 80%) and discharging (CC 0.5C 2.5V CUT-OFF) were repeated 100 times on the above-described lithium secondary batteries of the examples and comparative examples in a chamber maintained at 25 °C. The discharge capacity at 100th cycle was divided by the discharge capacity at the first cycle and multiplied by 100 to evaluate the fast charge capacity retention rate.

The measurement and evaluation results are shown in Table 2.

The content of the lithium-transition metal oxide particles in the examples and comparative examples, based on the total weight of the lithium metal phosphate particles and the lithium-transition metal oxide particles, the molar ratio of manganese based on the total moles of metals other than lithium in the lithium metal phosphate particles, the ratio of the thickness of the first cathode active material layer to that of the second cathode active material layer, and the median particle diameter (D50) of the lithium-transition metal oxide particles are shown in Table 1 below.

[TABLE 1]

|  | Content of lithium-transition metal oxide particles (wt%) | Manganese molar ratio | Thickness ratio | Median particle diameter (D50) ($\mu$m) |
|---|---|---|---|---|
| Example 1 | 30 | 0.6 | 3.3 | 3.5 |
| Example 2 | 40 | 0.6 | 2.1 | 3.5 |
| Example 3 | 50 | 0.6 | 1.4 | 3.5 |
| Example 4 | 60 | 0.6 | 0.9 | 3.5 |
| Example 5 | 70 | 0.6 | 0.6 | 3.5 |
| Example 6 | 20 | 0.6 | 5.0 | 3.5 |
| Example 7 | 30 | 0.5 | 3.3 | 3.5 |
| Example 8 | 30 | 0.7 | 3.3 | 3.5 |
| Example 9 | 30 | 0.4 | 3.3 | 3.5 |
| Example 10 | 30 | 0.8 | 3.3 | 3.5 |
| Example 11 | 30 | 0.6 | 0.5 | 3.5 |
| Example 12 | 30 | 0.6 | 5.3 | 3.5 |
| Example 13 | 30 | 0.6 | 3.2 | 3.0 |
| Example 14 | 30 | 0.6 | 3.6 | 4.0 |
| Example 15 | 30 | 0.6 | 3.6 | 2.5 |
| Example 16 | 30 | 0.6 | 3.6 | 4.5 |
| Example 17 | 30 | 0.6 | 3.6 | 10 |
| Example 18 | 30 | - | 3.2 | 3.5 |
| Comparative Example 1 | 30 | 0.6 | - | 3.5 |
| Comparative Example 2 | 15 | 0.6 | 3.3 | 3.5 |
| Comparative Example 3 | 75 | 0.6 | 3.3 | 3.5 |
| Comparative Example 4 | 100 | - | 1.0 | 3.5 |
| Comparative Example 5 | 0 | 0.6 | 1.0 | - |

[TABLE 2]

| | Energy density (Wh/L) | High-temperature capacity retention rate (%) (at 45°C, 100 cycles) | Fast charge capacity retention rate (%) (100 cycles) |
|---|---|---|---|
| Example 1 | 529 | ≥97.0 | ≥99.0 |
| Example 2 | 539 | ≥97.5 | |
| Example 3 | 550 | ≥98.0 | |
| Example 4 | 560 | | |
| Example 5 | 570 | | |
| Example 6 | 519 | ≥95.0 | ≥98.0 |
| Example 7 | 529 | ≥97.0 | ≥99.0 |
| Example 8 | 529 | ≥94.0 | ≥95.0 |
| Example 9 | 526 | ≥92.0 | ≥99.0 |
| Example 10 | 525 | ≥94.0 | Charging not possible for 20 minutes |
| Example 11 | 550 | ≥97.0 | ≥90.0 |
| Example 12 | 445 | ≥85.0 | ≥99.0 |
| Example 13 | 527 | ≥97.0 | ≥99.0 |
| Example 14 | 529 | ≥96.0 | ≥98.0 |
| Example 15 | 525 | ≥93.0 | ≥99.0 |
| Example 16 | 529 | ≥96.0 | ≥95.0 |
| Example 17 | 529 | ≥95.0 | Charging not possible for 20 minutes |
| Example 18 | 490 | ≥96.0 | ≥98.0 |
| Comparative Example 1 | 520 | 85.1 | 81.0 |
| Comparative Example 2 | 510 | 85.0 | Charging not possible for 20 minutes |
| Comparative Example 3 | 575 | 86.0 | 88.5 |
| Comparative Example 4 | 675 | 88.3 | 88.3 |
| Comparative Example 5 | 440 | <80.0 | Charging not possible for 20 minutes |

Referring to Tables 1 and 2, in the examples that included a first cathode active material layer including lithium metal phosphate particles and a second cathode active material layer including lithium-transition metal oxide particles, and in which the content of the lithium-transition metal oxide particles, based on the total weight of the lithium metal phosphate particles and the lithium-transition metal oxide particles, was 20 wt% to 70 wt%, both the high-temperature capacity retention rate and the fast charge capacity retention rate were improved compared to the comparative examples.

In Example 9, where the molar ratio of manganese based on the total moles of metals other than lithium in the lithium metal phosphate particles was less than 0.5, the high-temperature capacity retention rate was relatively lower compared to the other examples.

In Example 10, where the molar ratio of manganese based on the total moles of metals other than lithium in the lithium metal phosphate particles exceeded 0.7, the fast charge capacity retention rate was relatively lower compared to the other examples.

In Example 11, where the ratio of the thickness of the first cathode active material layer to that of the second cathode active material layer was less than 0.6, the fast charge capacity retention rate was relatively lower compared to the other examples.

In Example 12, where the ratio of the thickness of the first cathode active material layer to that of the second cathode active material layer exceeded 5.0, the energy density and high-temperature capacity retention rate were relatively lower compared to the other examples.

In Example 15, where the median particle diameter (D50) of the lithium-transition metal oxide particles was less than 3 μm, the high-temperature capacity retention rate was relatively lower compared to the other examples.

In Example 16, where the median particle diameter (D50) of the lithium-transition metal oxide particles exceeded

4 $\mu$m, the fast charge capacity retention rate was relatively lower compared to the other examples.

The invention is also defined by the following aspects:

Aspect 1. A cathode for a lithium secondary battery comprising:

a cathode current collector;
a first cathode active material layer disposed on at least one surface of the cathode current collector and comprising lithium metal phosphate particles; and
a second cathode active material layer disposed on the first cathode active material layer and comprising lithium-transition metal oxide particles,
wherein the content of the lithium-transition metal oxide particles, based on the total weight of the lithium metal phosphate particles and the lithium-transition metal oxide particles, is 20 wt% to 70 wt%.

Aspect 2. The cathode for a lithium secondary battery according to Aspect 1, wherein the content of the lithium-transition metal oxide particles, based on the total weight of the lithium metal phosphate particles and the lithium-transition metal oxide particles, is 30% by weight to 50% by weight.

Aspect 3. The cathode for a lithium secondary battery according to aspect 1 or aspect 2, wherein the lithium metal phosphate particles comprise manganese.

Aspect 4. The cathode for a lithium secondary battery according to aspect 3, wherein a molar ratio of manganese, based on the total moles of metals other than lithium included in the lithium metal phosphate particles, is 0.5 to 0.7.

Aspect 5. The cathode for a lithium secondary battery according to any one of aspects 1 to 4, wherein the lithium metal phosphate particles comprise a crystal structure represented by Formula 1-1 below:

$$[\text{Formula 1-1}] \qquad Li_aMn_xFe_{1-x}P_yO_{4+z}$$

(in Formula 1-1, $0.9 \leq a \leq 1.2$, $0.5 \leq x \leq 0.7$, $0.9 \leq y \leq 1.2$, and $-0.1 \leq z \leq 0.1$).

Aspect 6. The cathode for a lithium secondary battery according to any one of aspects 1 to 5, wherein the lithium-transition metal oxide particles comprise a single particle form.

Aspect 7. The cathode for a lithium secondary battery according to any one of aspects 1 to 6, wherein the lithium-transition metal oxide particles comprise nickel, cobalt and manganese.

Aspect 8. The cathode for a lithium secondary battery according to any one of aspects 1 to 7, wherein the lithium-transition metal oxide particles have a median particle diameter (D50) of 3 $\mu$m to 4 $\mu$m.

Aspect 9. The cathode for a lithium secondary battery according to any one of aspects 1 to 8, wherein a ratio of the thickness of the first cathode active material layer to that of the second cathode active material layer is 0.6 to 5.0.

Aspect 10. The cathode for a lithium secondary battery according to any one of aspects 1 to 9, wherein the first cathode active material layer is directly disposed on the cathode current collector, and the second cathode active material layer is directly disposed on the first cathode active material layer.

Aspect 11. A lithium secondary battery comprising:

the cathode for a lithium secondary battery according to any one of aspects 1 to 10; and
an anode disposed opposite to the cathode.

**Claims**

1.    A cathode for a lithium secondary battery comprising:

a cathode current collector;
a first cathode active material layer disposed on at least one surface of the cathode current collector and comprising lithium metal phosphate particles; and
a second cathode active material layer disposed on the first cathode active material layer and comprising lithium-transition metal oxide particles,
wherein the content of the lithium-transition metal oxide particles, based on the total weight of the lithium metal phosphate particles and the lithium-transition metal oxide particles, is 20 wt% to 70 wt%.

2.    The cathode for a lithium secondary battery according to claim 1, wherein the content of the lithium-transition metal oxide particles, based on the total weight of the lithium metal phosphate particles and the lithium-transition metal oxide particles, is 30% by weight to 50% by weight.

3. The cathode for a lithium secondary battery according to claim 1 or 2, wherein the lithium metal phosphate particles comprise manganese.

4. The cathode for a lithium secondary battery according to claim 3, wherein a molar ratio of manganese, based on the total moles of metals other than lithium included in the lithium metal phosphate particles, is 0.5 to 0.7.

5. The cathode for a lithium secondary battery according to any one of claims 1 to 4, wherein the lithium metal phosphate particles comprise a crystal structure represented by Formula 1-1 below:

[Formula 1-1] $Li_aMn_xFe_{1-x}P_yO_{4+z}$

(in Formula 1-1, $0.9 \leq a \leq 1.2$, $0.5 \leq x \leq 0.7$, $0.9 \leq y \leq 1.2$, and $-0.1 \leq z \leq 0.1$).

6. The cathode for a lithium secondary battery according to any one of claims 1 to 5, wherein the lithium-transition metal oxide particles comprise a single particle form.

7. The cathode for a lithium secondary battery according to any one of claims 1 to 6, wherein the lithium-transition metal oxide particles comprise nickel, cobalt and manganese.

8. The cathode for a lithium secondary battery according to any one of claims 1 to 7, wherein the lithium-transition metal oxide particles have a median particle diameter (D50) of 3 $\mu$m to 4 $\mu$m.

9. The cathode for a lithium secondary battery according to any one of claims 1 to 8, wherein a ratio of the thickness of the first cathode active material layer to that of the second cathode active material layer is 0.6 to 5.0.

10. The cathode for a lithium secondary battery according to any one of claims 1 to 9, wherein the first cathode active material layer is directly disposed on the cathode current collector, and the second cathode active material layer is directly disposed on the first cathode active material layer.

11. A lithium secondary battery comprising:

the cathode for a lithium secondary battery according to any one of claims 1 to 10; and
an anode disposed opposite to the cathode.

FIG. 1

100

- 120
- 110
- 105

FIG. 2

107          137

160

170

FIG. 3

| Europäisches Patentamt European Patent Office Office européen des brevets | **EUROPEAN SEARCH REPORT** | **Application Number** EP 25 19 9312 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 118 231 567 A (EVE ENERGY CO LTD) 21 June 2024 (2024-06-21) * paragraphs [[0001]], [0046], [[0033]] - [[0035]]; tables 1-2 * | 1,3-11 | INV. H01M4/36 H01M4/525 H01M4/58 |
| X | WO 2024/091499 A2 (SAFT AMERICA [US]) 2 May 2024 (2024-05-02) * paragraphs [0001], [[0054]], [[0060]] - [[0062]], [[0153]] - [[0158]]; example 1; table 1 * | 1-3,6,7, 9-11 | ADD. H01M10/0525 |
| X | US 2019/198864 A1 (CHANG CHIA-MING [TW] ET AL) 27 June 2019 (2019-06-27) * claims 1,2,5,7 * | 1-7,10, 11 | |
| A | EP 4 310 942 A1 (LG ENERGY SOLUTION LTD [KR]) 24 January 2024 (2024-01-24) * paragraphs [0041] - [0054]; tables 1-2 * | 1-11 | |
| A | US 2019/267664 A1 (LIN CHAOWANG [CN] ET AL) 29 August 2019 (2019-08-29) * paragraphs [0045] - [0096]; example 150; table 1 * | 1-11 | TECHNICAL FIELDS SEARCHED (IPC) C01B H01M C01G |
| A | WO 2024/001318 A1 (CONTEMPORARY AMPEREX TECHNOLOGY CO LTD [CN]) 4 January 2024 (2024-01-04) * claims 1-20 * | 1-11 | |
| A | CN 115 241 422 B (SHANGHAI PUNA ENERGY TECH CO LTD) 25 June 2024 (2024-06-25) * paragraph [020.028] * | 1-11 | |
| A | EP 4 310 941 A1 (LG ENERGY SOLUTION LTD [KR]) 24 January 2024 (2024-01-24) * claims 1-6; tables 1-2 * | 1-11 | |

-/--

The present search report has been drawn up for all claims

| Place of search | Date of completion of the search | Examiner |
|---|---|---|
| The Hague | 19 November 2025 | Golizadeh, Mehran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

**Application Number**

EP 25 19 9312

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 116 454 223 A (SK ENERGY CO LTD) 18 July 2023 (2023-07-18) * paragraphs [0125] - [0138] * ----- | 1-11 | |

TECHNICAL FIELDS SEARCHED (IPC)

The present search report has been drawn up for all claims

| Place of search | Date of completion of the search | Examiner |
|---|---|---|
| The Hague | 19 November 2025 | Golizadeh, Mehran |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9312

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | | Publication date | Patent family member(s) | | Publication date |
|---|---|---|---|---|---|
| CN 118231567 | A | 21-06-2024 | CN | 118231567 A | 21-06-2024 |
| | | | WO | 2025208686 A1 | 09-10-2025 |
| WO 2024091499 | A2 | 02-05-2024 | EP | 4609447 A2 | 03-09-2025 |
| | | | US | 2024145697 A1 | 02-05-2024 |
| | | | WO | 2024091499 A2 | 02-05-2024 |
| US 2019198864 | A1 | 27-06-2019 | NONE | | |
| EP 4310942 | A1 | 24-01-2024 | CN | 117280486 A | 22-12-2023 |
| | | | EP | 4310942 A1 | 24-01-2024 |
| | | | JP | 7703687 B2 | 07-07-2025 |
| | | | JP | 2024516988 A | 18-04-2024 |
| | | | KR | 20230146881 A | 20-10-2023 |
| | | | US | 2024250259 A1 | 25-07-2024 |
| | | | WO | 2023200082 A1 | 19-10-2023 |
| US 2019267664 | A1 | 29-08-2019 | CN | 109004170 A | 14-12-2018 |
| | | | CN | 113299875 A | 24-08-2021 |
| | | | CN | 113299876 A | 24-08-2021 |
| | | | CN | 113594409 A | 02-11-2021 |
| | | | US | 2019267664 A1 | 29-08-2019 |
| | | | US | 2020266483 A1 | 20-08-2020 |
| | | | US | 2022223902 A1 | 14-07-2022 |
| | | | US | 2022223903 A1 | 14-07-2022 |
| | | | US | 2024297339 A1 | 05-09-2024 |
| WO 2024001318 | A1 | 04-01-2024 | CN | 115842105 A | 24-03-2023 |
| | | | EP | 4443544 A1 | 09-10-2024 |
| | | | US | 2025070142 A1 | 27-02-2025 |
| | | | WO | 2024001318 A1 | 04-01-2024 |
| CN 115241422 | B | 25-06-2024 | NONE | | |
| EP 4310941 | A1 | 24-01-2024 | CN | 117256059 A | 19-12-2023 |
| | | | EP | 4310941 A1 | 24-01-2024 |
| | | | JP | 7736386 B2 | 09-09-2025 |
| | | | JP | 2024516984 A | 18-04-2024 |
| | | | KR | 20230146889 A | 20-10-2023 |
| | | | US | 2024234723 A1 | 11-07-2024 |
| | | | WO | 2023200081 A1 | 19-10-2023 |
| CN 116454223 | A | 18-07-2023 | CN | 116454223 A | 18-07-2023 |
| | | | DE | 202022003149 U1 | 06-02-2025 |
| | | | EP | 4210131 A2 | 12-07-2023 |
| | | | KR | 20230107016 A | 14-07-2023 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 19 9312

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | Publication date | Patent family member(s) | | Publication date |
|---|---|---|---|---|
| | | US | 2023223530 A1 | 13-07-2023 |

page 2 of 2

EPO FORM P0459